# EUROPEAN PATENT SPECIFICATION

(11) **EP 2 530 968 B1**
(45) Date of publication and mention of the grant of the patent: **04.12.2013**
(21) Application number: 11305658.4
(22) Date of filing: 30.05.2011
(51) Int. Cl.: H04W 24/06

(54) **Method for testing a device bound to be inserted in a mobile terminal, as well as corresponding system, device and computer program product**
Verfahren zum Testen einer Vorrichtung für Einsatz in ein mobiles Endgerät, System, Vorrichtung, Signal und zugehöriges Computerprogramm
Procédé pour tester un dispositif destiné à être inséré dans un terminal mobile, système, dispositif, signal et programme informatique correspondant

(43) Date of publication of application: 05.12.2012
(73) Proprietor: Sequans Communications, 92800 Puteaux (FR)
(72) Inventor: Solignac, Julien, 75116 Paris (FR)
(74) Representative: Le Saux, Gaël

(56) References cited:
- WO-A2-2004/008165
- US-A1- 2007 072 599
- US-A1- 2010 289 679
- US-A1- 2011 053 518

## Description

### 1. Domain of the invention

The present invention relates to a testing (calibration and/or screening) method for a wireless device under test (DUT) by an automatic test equipment (ATE).

More precisely, the present invention relates to the test of wireless mobile terminals that must be able to operate on a flexible bandwidth (BW) to ensure a smooth migration from existing cellular systems to high capacity, high data rate systems using existing radio spectrum.

To achieve this migration, new telecommunication protocols are proposed.

For example, third generation Long Term Evolution (3G LTE) has been proposed as a new flexible cellular system. 3G LTE is intended as an evolution of the 3G WCDMA standard. 3G LTE uses OFDM and operates on BWs spanning from 1.25 MHz to 20 MHz. Data rates of up to 100 Mb/s is possible in the high BW 3G LTE service. 3G LTE system achieves higher frequency efficiency and user throughput, and provide full IP-based functionalities with low latency and low cost.

More recently, LTE Advanced is a preliminary mobile communication standard, formally submitted as a candidate 4G system to ITU-T in late 2009, and which has been approved into ITU, International Telecommunications Union, IMT-Advanced and expected to be finalized by 3GPP in early 2011. It is standardized by the 3rd Generation Partnership Project (3GPP) as a major enhancement of the 3GPP Long Term Evolution (LTE) standard.

WiMAX (Worldwide Interoperability for Microwave Access) is also a telecommunications protocol that provides fixed and mobile Internet access. The current WiMAX revision provides up to 40 Mbit/s with the IEEE 802.16m update expected to offer up to 1 Gbit/s fixed speeds.

### 2. Prior Art Solutions

A wireless mobile device, in order to function efficiently within a network, must meet strict radio frequency (RF) requirements. The consistency spread of radio frequency (RF) components used within such devices predominantly warrants the test of each individual mobile device at the factory.

Testing procedures universally require measuring a number of relevant parameters or setting of the device. For example, for wireless mobile terminals, this is classically accomplished by a first step of calibration consisting in connecting for example the wireless device under test to a specialized automated test equipment (ATE) producing and measuring a radio frequency (RF) signal in a number of different configurations (modulation, frequency, gain...).

Automatic Test Equipment (ATE) refers to an automated, usually computer-driven, system for testing devices, such as semiconductors, electronic circuits, and printed circuit board assemblies. A device tested by ATE is referred to as a Device Under Test (DUT).

ATE typically includes a computer system and a testing device or a single device having corresponding functionality. Pin electronics are typically part of the testing device. Pin electronics can include drivers, comparators and/or active load functionality for testing a DUT. The drivers provide test signals to pins on the testing device.

A complementary step to calibration consists in screening the device to verify that the calibration procedure was successful and that the calibrated device's residual error is within tolerance. Once again screening requires performing measurements in a variety of configurations. It is however preferable that these measurements are performed in a manner that best reflects the DUT's native environment.

Switching from one configuration to another requires some manner of synchronization between the ATE and DUT which can take up time. For a large number of configurations, time thus spent can represent a large portion of the overall calibration time which translates directly into cost for the manufacturer.

The most basic form of ATE/DUT synchronization is via direct control of both. Typically a control unit (often embedded within the ATE) instructs both ATE and DUT to switch to a given configuration and then records the measured parameters before moving on to the next configuration.

Such an approach has the double disadvantage of losing time both to the control protocol and to the setup required to perform the relevant measures without prior knowledge: a measure made on a signal formatted to adhere to the mobile device's telecommunication protocol might require a lengthy time search for synchronization to be reached before any measures can be made.

A more advanced method avoids the above shortcomings by iterating through the necessary configurations in a manner agreed by both the DUT and ATE, prior to starting the test.

A disadvantage of this scheme however is that it requires extra complexity to handle the sequencing both on the DUT and ATE. Switching costs may also be incurred in adapting the sequence to another ATE as the latter may impose a proprietary automation application programming interface (API).

Methods for testing devices bound to be inserted into wireless mobile devices are disclosed in US 2011/0053518 A1 and in US 2010/0289679 A1.

### 3. Description of the Invention

The invention does not comprise these drawbacks of the prior art techniques. Indeed, the invention relates to a method for testing a device bound to be inserted in a wireless mobile terminal.

According to the invention, said method comprises the following steps:
- building of a test signal from an RF signal, said building step comprising an insertion step, in said RF signal, of instructions for a self-test procedure of said device, said test-signal both comprising other data and said instructions for a self-test procedure of said device, said instructions being embedded in said test signal and said instructions comprising a signature,
- transmitting of said test signal to the device under test (DUT),
- receiving of said test signal by said device under test,
- intercepting in said test signal by the device under test, of said embedded instructions, by checking said signature and
- implementing a self-test procedure delivering settings values to an automatic test equipment (ATE), as a function of said instructions intercepted in said test signal.

Thus, when performing a sequence of measures that require an RF signal being sent to the DUT the invention provides a signal, called "test signal", which is built to embed instructions that permit the DUT to implement itself a self-test procedure. Such test signal provides the DUT with the knowledge necessary to follow the sequence and report the relevant measurements to the ATE.

For example for measures taken as a time series, the test signal might embed the configuration to set at the next measurement interval, including what measures to report.

In comparison with the state of the art methods, an implementation of the proposed scheme should at least match a state-of-the-art predefined sequence in speed. Indeed, the two schemes are alike for preserving the control channel.

One first advantage of an implementation of the invention can allow one using a less complex ATE.

Indeed, first a control unit (embedded or not in the ATE) builds a test signal by inserting in a classical fully modulated RF signal generated instructions for a self-test procedure for a device to test (DUT), and then charges it on a test signal generator embedded in the ATE.

The test signal generator of the ATE comprises for example classical RF signal generators (e.g Agilent N5182A MXG) able to generate simple signals (tones, pulses) or to playback complex ones like 3G, LTE, WiMAX.

The test signal generator reproduces the test signal built and delivered by the control unit and then transmits it to the DUT. Thus, once the test signal of the invention is built, the test signal is advantageously re-used for every new device to test.

Thus, the method of the invention permits to reduce the complexity of the ATE, while avoiding lengthy time search for synchronization, which leads to time gain. Indeed, assuming that the ATE is of the signal generator type that merely reproduces the provided test signal received from the building device and does not build one from the scratch, the ATE need only to playback the test signal and does not have to control the DUT and to be synchronised to it.

This is particularly relevant when performing measures on the reception hardware of the DUT as the latter can do so in an autonomous manner with only the RF signal as input from the ATE.

The potential to use a simpler ATE (or use a complex ATE in a simpler manner) is also an advantage when it comes to portability. ATEs that are sufficient for calibration and screening needs can necessarily transmit an arbitrary signal and are hence capable of running procedures that only require playback of instruction-embedded signals with minimal porting effort.

According to an other embodiment, said method further comprises a formatting step of the instructions as a function of a predetermined communication protocol.

Indeed, the series of instructions are formatted in order to be encoded as a function of a predetermined communication protocol. Thus, when the type of communication protocol of the DUT is changed, a new type of test signal is built. The series of instructions of the test signal are indeed formatted following the communication protocol requirements of the DUT, in order to be well interpreted by the DUT.

Thus, the method of the invention permits to test all the DUTs that support the same communication protocol with a single test signal.

According to an embodiment, said predetermined communication protocol belongs to the group comprising:
- LTE,
- LTE Advanced,
- WiMAX.

According to an embodiment, said intercepting step implements an interpretation of said instructions in a language as a function of said predetermined communication protocol, delivering orders for measuring configuration settings.

Indeed, the DUT receives the test signal, and intercepts, that is to say isolate, the inserted formatted instructions. Since, the instructions format corresponds to the format required by the communication protocol of the DUT, which is able to decode such instructions, which correspond to a series of orders for measuring the configuration settings of the DUT.

According to an embodiment, the instructions are bound to be interpreted into the second layer of the OSI architecture, in the device bound to be inserted in a wireless mobile terminal.

According to an other embodiment, the instructions are bound to be interpreted between the first and the second layer in the OSI architecture, in the device bound to be inserted in a wireless mobile terminal.

According to an embodiment, said step of implementation of a self-test procedure comprises the following substeps:
- executing of said orders,
- obtaining some values of said configuration settings,
- transmitting of said values to said automatic test equipment (ATE).

Thus, the DUT launches itself the test procedure and avoids time loss (which was present in the prior art where the ATE has to control the DUT).

According to another aspect, the invention also relates to a system for testing a device bound to be inserted in a wireless mobile terminal.

According to the invention, said system comprises:
- a device for building of a test signal from an RF signal, said building device comprising means for inserting, in said RF signal, instructions for a self-test procedure of said device, said test signal both comprising other data and said instructions for a self-test procedure of said device, said intructions being embedded in said test signal and said instructions comprising a signature,
- means for transmitting said test signal to a device under test (DUT),
- the device under test for receiving said test signal, said device under test comprising:
- means for intercepting in said test signal by the device under test, said embedded instructions by checking said signature, and
- means for implementing a self-test procedure delivering settings values to an automatic test equipment (ATE), as a function of said instructions intercepted in said test signal.

In another aspect, the invention also relates to a device bound to be inserted in a wireless mobile terminal. According to the invention, said device comprises:
- means for receiving a test signal both comprising instructions for a self-test procedure of said device and other data, said instructions being embedded in said test signal and said instructions comprising a signature,
- means for intercepting instructions embedded in a test signal by checking said signature, and
- means for implementing a self-test procedure delivering settings values to an automatic test equipment (ATE), as a function of said instructions intercepted in said test signal.

In another aspect, the invention also relates to a computer program product downloadable from a communications network and/or stored on a computer readable medium and/or executed by a microprocessor, including instructions of program code for implementing the method for testing a device bound to be inserted in a wireless mobile terminal, as previously described, when run on a computer.

### 4. List of the figures

The proposed method, system, device, test signal and computer program product are described in the following by way of examples in connection with the accompanying figures without limiting the scope of the protection as defined by the claim. The figures show:
- figure 1 is an illustration the main steps of the method according to a first basic embodiment,
- figure 2 gives an illustrative example of a system of the invention,
- figure 3 illustrates a sequence diagram of the method according to said first basic embodiment,
- figure 4 illustrates an OSI architecture of the DUT,
- figure 5 illustrates an example of a downlink allocation of a WiMAX frame,
- figure 6 illustrates an example of a downlink allocation of a LTE frame.

### 5. Description of a detailed embodiment

### 5.1 General principle of the invention

The proposed technique relates to the test of a device bound to be inserted in a wireless mobile terminal in order to validate its configuration.

Indeed, a wireless device, in order to function efficiently within network, must meet stringent RF requirements. Testing procedures comprising calibration and/or screening procedures. In the following a device under test will be referred by its acronym DUT, and an automatic test equipment will be referred by its acronym ATE.

Since a mobile wireless device implements one or several wireless telecommunication protocols, according to the state of the art, switching from one configuration to another requires some time to synchronise the ATE and the DUT.

The proposed method decreases above-mentioned time by providing a signal, which is built to embed instructions that permit the DUT to implement itself a self-test procedure. Such test signal provides the DUT with the knowledge necessary to follow the sequence and report the relevant measures to the ATE.

### 5.2 Description of a first embodiment

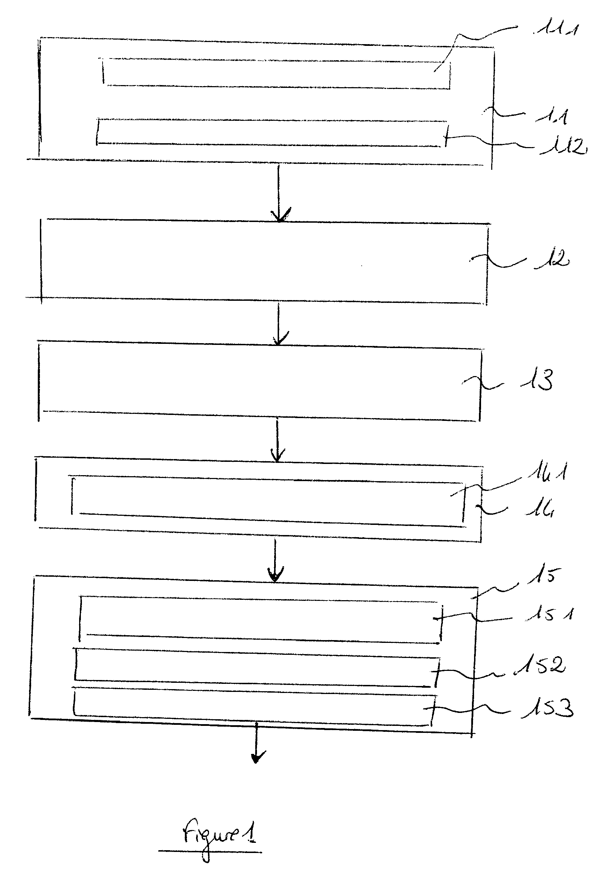

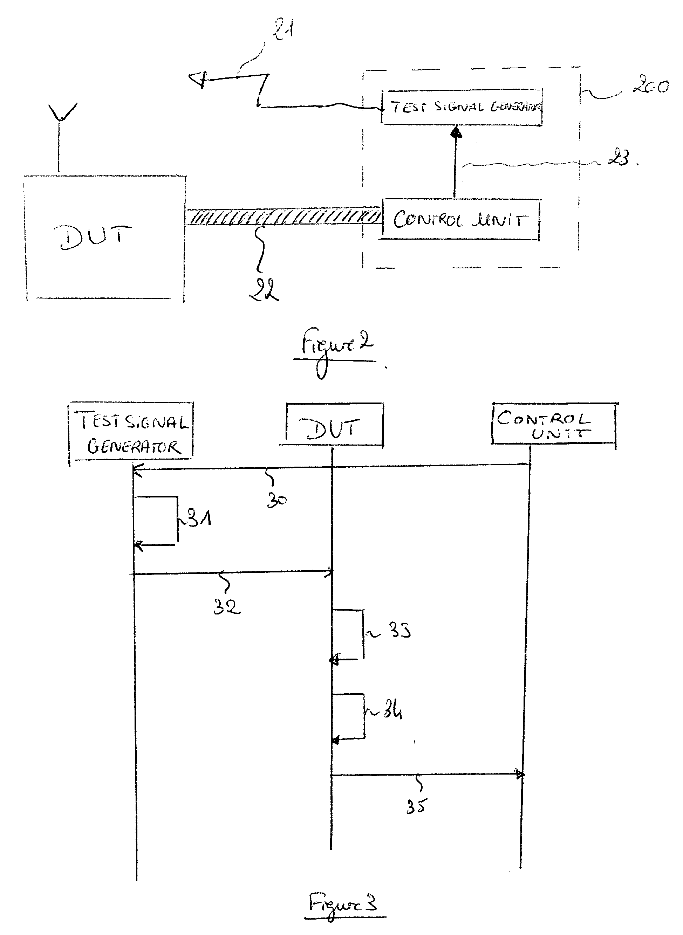

To understand how the method of the invention is implemented, figure 1 illustrates the main steps of the method according to a first embodiment, whereas figure 2 illustrates the different elements involved in the systems of the invention, and figure 3 illustrates a sequence diagram.

First, the system represented in figure 2 involves an ATE 200 and a wireless DUT. The ATE 200 comprises a control unit (embedded or not in the ATE) instructing both ATE and DUT to switch to a given configuration and a test signal generator.

The DUT is wireless and receives signals from the test signal generator, whereas the DUT and the control unit are connected for example by an Ethernet link 22.

Basically, in the proposed method, the control unit of figure 2 (embedded or not in the ATE) implements the step of building 11 a test signal from an RF signal represented in figure 1.

When building (11) the test signal, the control unit inserts 112 in a classical fully modulated RF signal generated instructions for a self-test procedure for a device to test.

Depending on the algorithm used as a function of the desired tests, it might be faster to insert the instructions in a simple RF signals (e.g. a pure sine), as it is done usually for calibration, rather that the mobile device's native modulation. Considering screening, it is preferable to use a fully modulated RF signal better representing the DUT native environment.

Nonetheless, it is obvious that the use of a fully modulated RF signal permits to increase the tests efficiency. Indeed, said building step comprises an insertion step 112, in the RF signal, of instructions for a self-test procedure of the DUT. A fully modulated RF signal permits to insert more instructions than in a pure sine RF signal.

Some examples of the instructions allocation in the RF signal depending of a selected communication protocol will be described in detail in the following, depending on the used communication protocol. Indeed, when the communication protocol changes, the invention proposes to format (111) the instructions inserted (112) in the RF signal in order to fulfil the selected communication protocol requirements.

The RF signal comprising instructions for a self-test procedure of the device to test, is renamed as a "test signal".

Then the control unit charges (23) it on the test signal generator embedded in the ATE 200.

The test signal generator of the ATE comprises for example classical RF signal generators (e.g Agilent N5182A MXG) able to generate simple signals (tones, pulses) or to playback complex ones like 3G, LTE, WiMAX.

The test signal generator reproduces the test signal built and delivered by the control unit and then transmits it to the DUT.

Thus, once the test signal of the invention is built, the test signal is advantageously re-used for every new device to test.

The DUT receives (13) the test signal.

According to a general embodiment, the device under test keeps track of whether it has been calibrated or not. Consequently, devices that have not been calibrated are automatically in manufacturing mode that is to say in a "test configuration".

According to a variant, manufacturing mode can also be enabled through any interface that is normally used to control the DUT (e.g. Media Independent Interface (MII), AT command terminal: a terminal that sends commands through a control channel (serial line, or encapsulated in protocols such as the ACM (Abstract Control Model) protocol is often used over USB...) using for example the Hayes command set to control the device, such control scheme being frequently encountered in modems/cell phones). According to this variant, the ATE can issue a vendor specific AT command to make the DUT enter test mode.

According to another variant, it is also possible for the DUT to always look for a test signal.

Then, the DUT implements an intercepting step 14 of the instructions embedded in the test signal.

Indeed, according to the invention, the DUT is able to detect the instructions allocation in the test signal. According to a specific variant of this embodiment, the instructions allocation depends on the predetermined protocol information. Such allocations are detailed in the following of the specification.

Depending on the predetermined communication protocol, the intercepting step (14) involves an interpretation substep (141) to extract orders for measuring configuration settings of the DUT in a language (specific or generic), from the instructions embedded in the test signal in a format depending on the communication protocol.

In a first embodiment, the interception scheme considers that all the packets contained in the test signal are valid and supposed to contain instructions.

In a more robust embodiment, such interception implements for example a signature test on the test signal. Such signature test is particularly useful when implementing a new test procedure, permitting to add a checking level.

According to a first variant of this robust embodiment, when the DUT is in a "test configuration", the packets received by the DUT are subject to a signature test permitting to sort the packets containing instructions from those who do not.

This signature test corresponds for example to check the first 128 bits of every packet versus a predetermined checking value called a "magic value".

Thus, implementing such a signature check permits to increase the robustness of the DUT at a minor cost, and permits the mixing of instructions and "dummy" packets. Such a mix allows for computing per packet statistics such as the packet error rate (PER) during the test sequence.

According to a second variant of this robust embodiment, considering that the device under test is not in a "test configuration" but is always looking for a test signal, the interception scheme aims at reducing the resource consumption when checking every packet.

To this end the signature test involves a first check of a "magic value" sequence at the header of every packet. For example, the header could comprise a 128 bits sequence. The check is implemented incrementally, (i.e. byte by byte), so that the check ends as soon as an invalid byte is detected.

Then, when the first check succeeds, the packet containing the valid header is authenticated by running a message authentication code (MAC) with a special key stored in the device.

Such a second checking step provides robustness against malicious attackers attempting to compromise the device by crafting traffic sent through the device to exhibit a valid header detecting according the above first check.

Passing this "double-step" signature check sets the DUT in a test configuration.

Then considering the intercepted instructions, the DUT then implements (15) independently a self-test procedure, delivering settings (parameters) values to a control unit embedded or not in an automatic test equipment (ATE), as a function of said instructions intercepted in said test signal.

Such implementation involves for example an executing step 151 of the orders obtained from the intercepting step.

Such orders launch some settings tests and permit to obtain (152) values of the configuration settings of the DUT. It is possible, that the instructions contain for example time stamps to synchronise a series of tests with what is transmitted and expected by the ATE.

Once, the values of the configurations settings are obtained, the DUT transmits (153) them to the control unit (embedded or not in the ATE), for example through the physical Ethernet link 22.

The figure 3 summarizes all the method according to the invention by a sequence diagram representing how the method steps are operated between the different elements of the system of figure 2 and in what order.

Thus, the control unit (comprising means for inserting, in an RF signal, instructions for a self-test procedure of the DUT) builds and charges first (30) the test signal on the test signal generator of the ATE.

The building (30) of the test signal involves for example means for format the instructions when it is required by the communication protocol used by the system. Then, using means for transmitting, the test signal generator generates and transmits (32) the test signal to the DUT.

Using means for intercepting, the DUT set in a test configuration, extracts (33) the embedded instructions, using if necessary means for interpreting the format, previously used by the control unit, for embedding the instructions.

Taking into account the instructions, the DUT implements (34) independently a self-test procedure delivering (35) settings values to the control unit (embedded or not in the ATE 20), as a function of said instructions intercepted in said test signal.

### 5.3 Description of a first specific embodiment

As already mentioned, DUTs (inserted in mobile wireless device) implements one or several wireless telecommunication protocols. In general, such protocols support a means to configure the mobile device to perform and report settings to the base station for link adaptation or survey purposes.

The reported settings depend on the type of screening/testing which have to be implemented, and on the type of DUT.

Such settings are however not sufficient and not dedicated for device calibration and/or screening since reported settings may by quantized, resulting in insufficient precision and since the available measurements are limited measurements such as reception power or error vector magnitude (EVM) are near universal, but others (e.g. IQ imbalance) are missing.

The minimal set of changes to enable calibration screening would consist in: adding capacity (dedicated hardware &software), performing extra measurements, or adding means to request/report extra measurements over wireless link.

In any case, for screening/testing purposes, a full-blown protocol stack introduces unnecessary complexities/costs.

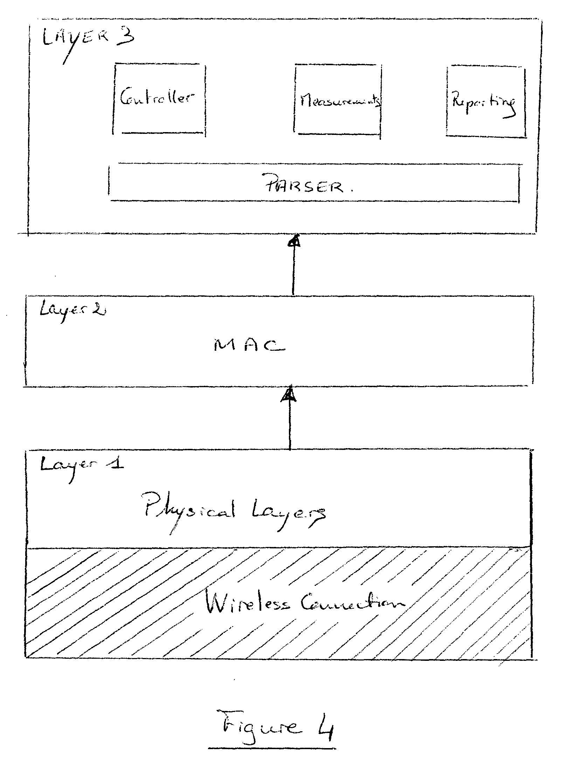

Reasonable implementations would bypass the higher layers of the OSI architecture as represented by figure 4, replacing those layers with the minimal custom logic required for the task as represented by figure 4.

The first specific embodiment aims at illustrating a possible implementation of the invention when considering the LTE communication protocol.

A DUT corresponding to an LTE modem is capable of running either an LTE protocol stack (PS) or a manufacturing test suite (MTS). The MTS has the capability to synchronize and to demodulate an arbitrary LTE signal.

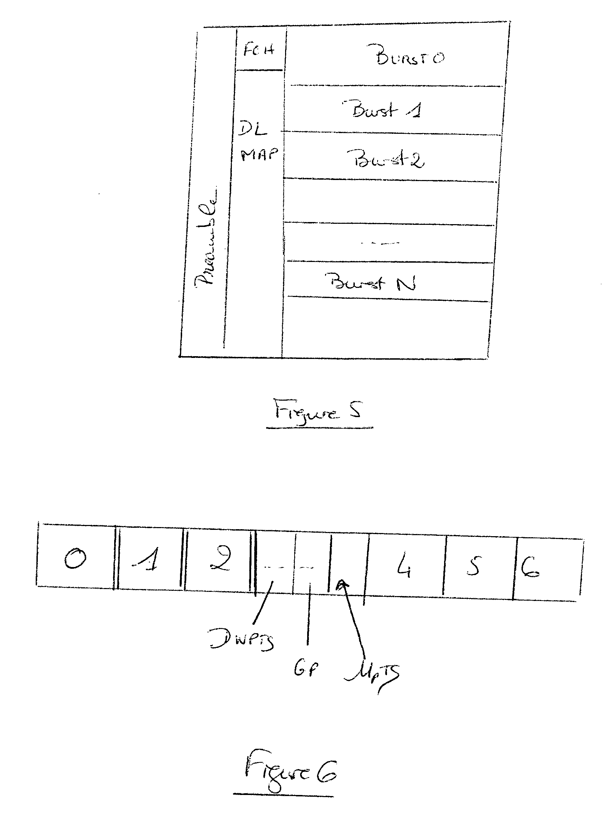

Considering figure 6, illustrating an example of a downlink allocation of a LTE frame, in LTE, downlink allocations are described by downlink indicators DCI in the physical downlink control channel PDCCH. A "special LTE subframe", located at a downlink to uplink transition in TDD LTE, is made of three special time slots: Downlink Pilot Timeslot DwPTS, Guard Period GP, and Uplink Pilot. Timeslot UpPTS.

Allocations are discriminated per radio network temporary identifier RNTI, a broadcast RNTI exists but its use is more restrictive on the maximum allocation size, taking into account the restrictions on the maximum allocation size one can use.

Allocations on a pre-configured RNTI are decoded, the data plane is kept identical to the protocol stacks' up to MAC exit as represented in figure 4.

At that point packets are subject to a signature test to winnow the non-valid packets which do not contain instructions and to pass to the controller the valid packets containing instructions for a self-test procedure.

In this context, the test signal of at least one device bound to be inserted in a wireless mobile terminal according to the invention, is built by considering that the instructions are bound to be interpreted into the second layer of the OSI architecture of the device under test inserted in the LTE modem.

Thus, in the second layer, control packets are detected, containing a number of instructions that are run by an extensible domain specific language interpreter. An abbreviated list of instructions is for example:
a) sleep(): waits until a given date, given as an LTE frame/subframe pair.
b) changeParam () : changes a parameter of the modem, typical parameters would be the RF gain and frequency.
c) performMeasure () : performs a measure (e.g. reception power, signal to noise ratio...) and automatically reports it on the ATE's control channel. It is also possible to process several measures of the same type together in a way that makes sense (e.g. calculate the mean) in order to reduce control channel bandwidth.
d) waitTrigger(): Waits for a given condition to be verified before continuing. Such conditions generally operate on the values of measures so as to, for example, wait until a large decrease in input power is detected. Such instruction permits to implement an alternative synchronisation by giving the start of the test sequence corresponding to the time when the power decreases, comparing to the synchronisation consisting in sequencing the signal waveform (e.g LTE)

The above instructions are sufficient to perform reception calibration and screening with a signal generator that plays an appropriately crafted signal while iterating through different frequencies and powers.

Concerning the transmitting step, since this implementation makes use of a LTE control channel (PDCCH), the instruction set is sufficient for the DUT to follow any particular sequence though there is no development/integration gain on the ATE side compared to prior art.

It is also possible to send a list of instructions via the control interface to avoid unnecessary complexity for transmission tests.

Indeed, compared to a state-of-the-art DUT implementation, the only addition is in the mechanism, required to intercepts embedded instructions from the test signal.

Thus, the added complexity is minor as this implementation re-uses the first two layers of the protocol stack PS and need only implement a signature checking routine according to a robust embodiment.

The invention avoids configuring both ATE and DUT for each point of the test sequence by only processing a specific test signal. Thus, the global complexity of deploying this instance of the invention is less than that of a traditional implementation.

After intercepting the embedded instructions of the test signal, the LTE modem is able to implement independently a self-test procedure delivering then settings values to ATE. For example, the self-test procedure comprises the following measurements:
- full band reception power for channels 0 & 1 in hundredth of dBm, twice per frame,
- mean (over channels) reference signal reception power, in hundredth of dB, once per frame,
- mean reference signal reception quality, in 1/16th dB, once per frame.

Such measurements outputs some settings, for example: the variable gain amplifier (VGA) and low noise amplifier (LNA) gain codes for reception channels 0 & 1, the variable gain amplifier (VGA) gain code for transmission channel, the carrier frequency in Hz...

According to an embodiment, all measurements deliver setting values corresponding to big endian integers.

Considering the triggers, according to an embodiment no triggers are implemented because a controller stalls the configuration until a reset is issued. It is also possible to provide a threshold (*measureId, min, max*) when a given measurement moves out of the given bounds.

All the outputted settings are then reported as often as available through a byte stream on the ATE control channel. To better parse these setting values, a formatting in DWORD pairs (*measureId, measured value*) is for example used. Other formats, binary or not, could also be used, as for example an STDF format.

### 5.4 Description of a second specific embodiment

The second specific embodiment aims at illustrating a possible implementation of the invention when considering the WiMAX communication protocol.

WiMAX frames, represented on figure 5, have a 5ms period fixed lay out. In the downlink portion of a frame, the Frame Control Header (FCH), located at a fixed location within the frame provides the information necessary to decode the downlink map (DL_MAP) which describes the downlink burst allocations. Once decoded bursts contain one or several packets, each identified with a generic Mac header that provides the connection ID (CID) of the payload (e.g. "burst 0", "burst 1"...).

Considering the WiMAX communication protocol, according to the proposed invention the instructions are embedded within a payload with a broadcast CID (e.g. "burst 0", "burst 1"...), ensuring that the DUT will decode the message without prior knowledge.

In this context, the test signal of a device bound to be inserted in a wireless mobile terminal according to this embodiment is built by considering that the instructions are bound to be interpreted between the first and the second layer of the OSI architecture of the device under test inserted in the WiMAX modem.

Thus, between the first and the second layer, control packets are intercepted, containing a number of instructions, without further processing by the WiMAX protocol stack and provide them to the controller.

Thus, a simple control scheme is used here. In the received test signal, control packets comprising instructions are interpreted in the DUT, following a fixed layout where each field specifies one downlink order that will be active at the next frame.

The DUT uses these orders to implement independently a self-test procedure in order to set its own settings accordingly. In an embodiment, all setting values are big endian integers.

For example the control payload layout could be illustrated by the following table:

| Bytes | Parameter announced | Parameter(s) set by device |
|---|---|---|
| 0-3 | Frequency (Hz) | Carrier center frequency |
| 4-7 | Transmission power attenuation | Reception gain codes |
| 8-11 | Link attenuation | Transmission gain codes |

Interpreting the above-mentioned instruction embedded in the test signal following the above control payload layout, setting values are measured once per frame and reported to the ATE for example via an Ethernet link 22.

For example, the outputted settings are: the mean reception error vector magnitude (EVM), the mean received power, the frequency offset, the IQ offset for channels 0 & 1, the temperature...

Comparing these first and second specific embodiments show that depending on the used communication protocol different interceptions points in the OSI architecture are involved: the LTE example recycles more of the protocol stack than the WiMAX one.

In addition, the implementation of the self-test procedures differs from one specific embodiment to another. Indeed, the method using the WiMAX communication protocol informs the DUT of the next frame whereas the method using the LTE communication protocol controls the device directly.

Both cases involve the reuse of the physical layers of the device's protocol stack on the one hand, and the addition of extra logic to implement the control/reporting scheme is inserted on the other hand.

## Claims

1. Method for testing a device (DUT) bound to be inserted in a wireless mobile terminal, **characterized in that** said method comprises the following steps:
- building of a test signal from an RF signal, said building step comprising an insertion step, in said RF signal, of instructions for a self-test procedure of said device, said test signal both comprising other data and said instructions for a self-test procedure of said device, said instructions being embedded in said test signal and said instructions comprising a signature,
- transmitting of said test signal to a device under test (DUT),
- receiving of said test signal by said device under test,
- intercepting in said test signal by the device under test, of said embedded instructions by checking said signature, and
- implementing a self-test procedure delivering settings values to an automatic test equipment (200), as a function of said instructions intercepted in said test signal.

2. Method for testing a device according to claim 1, **characterized in that** said method further comprises formatting the instructions as a function of a predetermined communication protocol.

3. Method for testing a device according to claim 2, **characterized in that** said predetermined communication protocol belongs to the group comprising:
- LTE,
- LTE Advanced,
- WiMAX.

4. Method for testing a device according to anyone of claims 1 to 3, **characterized in that** said intercepting step comprises interpreting said instructions in a language as a function of said predetermined communication protocol, delivering orders for measuring configuration settings.

5. Method for testing a device according to anyone of claims 1 to 4, **characterized in that** said instructions are bound to be interpreted into the second layer ofthe OSI architecture, in said device bound to be inserted in a wireless mobile terminal.

6. Method for testing a device according to anyone of claims 1 to 4, **characterized in that** said instructions are bound to be interpreted between the first and the second layer in the OSI architecture, in said device bound to be inserted in a wireless mobile terminal.

7. Method for testing a device according to claim 4, **characterized in that** said step of implementation of a self-test procedure comprises the following substeps:
- executing said orders,
- obtaining some values of said configuration settings,
- transmitting said values to said automatic test equipment (200).

8. System for testing a device bound to be inserted in a wireless mobile terminal,
**characterized in that** said system comprises:
- a device for building of a test signal from an RF signal, said building device comprising means for inserting, in said RF signal, instructions for a self-test procedure of said device, said test signal both comprising other data and said instructions for a self-test procedure of said device, said instructions being embedded in said test signal and said instructions comprising a signature,
- means for transmitting said test signal to a device under test (DUT),
- a device under test (DUT) for receiving said test signal,
said device under test comprising:
- means for intercepting in said test signal by the device under test, said embedded instructions by checking said signature, and
- means for implementing a self-test procedure delivering settings values to an automatic test equipment (200), as a function of said instructions intercepted in said test signal.

9. Device bound to be inserted in a wireless mobile terminal, **characterized in that** it comprises:
- means for receiving a test signal both comprising instructions for a self-test procedure of said device and other data, said instructions being embedded in said test signal and said instructions comprising a signature,
- means for intercepting instructions embedded in a test signal by checking said signature, and
- means for implementing a self-test procedure delivering settings values to an automatic test equipment (200), as a function of said instructions intercepted in said test signal.

10. Computer program product downloadable from a communications network and/or stored on a computer readable medium and/or executed by a microprocessor, including instructions of program code for implementing a method for testing a device bound to be inserted in a wireless mobile terminal, by at least one of claims 1 to 5, when run on a computer.

## Patentansprüche

1. Verfahren zum Testen einer Vorrichtung (DUT), dazu vorbereitet in ein drahtloses Mobilterminal eingesetzt zu werden und **dadurch gekennzeichnet, dass** das Verfahren folgende Schritte aufweist:
- Erzeugen eines Testsignals aus einem Radiofrequenzsignal, wobei der Erzeugungsschritt einen Einsetzschritt von Anweisungen für eine Selbsttestprozedur der Vorrichtung in das Radiofrequenzsignal aufweist, wobei das Testsignal sowohl andere Daten als auch die Anweisungen für eine Selbsttestprozedur der Vorrichtung aufweist, wobei die Anweisungen in das Testsignal eingebettet sind und die Anweisungen eine Signatur aufweisen,
- Senden des Testsignals an eine zu testende Vorrichtung (DUT),
- Empfangen des Testsignals durch die zu testende Vorrichtung,
- Abfangen der eingebetteten Anweisungen durch Überprüfen der Signatur in dem Testsignal durch die zu testende Vorrichtung, und
- Umsetzen einer Selbsttestprozedur, die Einstellungswerte an eine automatische Testausrüstung (200) in Abhängigkeit von den Anweisungen, die in dem Testsignal abgefangen wurden, ausgibt.

2. Verfahren zum Testen einer Vorrichtung nach Anspruch 1, **dadurch gekennzeichnet, dass** das Verfahren weiter ein Formatieren der Anweisungen in Abhängigkeit von einem vorbestimmten Kommunikationsprotokoll aufweist.

3. Verfahren zum Testen einer Vorrichtung nach Anspruch 2, **dadurch gekennzeichnet, dass** das vorbestimmte Kommunikationsprotokoll zu der Gruppe gehört, die aufweist:
- LTE,
- LTE Advanced,
- WiMAX.

4. Verfahren zum Testen einer Vorrichtung nach einem der Ansprüche 1 bis 3, **dadurch gekennzeichnet, dass** der Abfangschritt ein Auswerten der Anweisungen in einer Sprache in Abhängigkeit von dem vorbestimmten Kommunikationsprotokoll aufweist, wobei Befehle zum Messen von Konfigurationseinstellungen ausgegeben werden.

5. Verfahren zum Testen einer Vorrichtung nach einem der Ansprüche 1 bis 4, **dadurch gekennzeichnet, dass** die Anweisungen dazu vorbereitet sind, in der zweiten Schicht in der OSI-Architektur in der Vorrichtung, die dazu vorbereitet ist in ein drahtloses Mobilterminal eingesetzt zu werden, ausgewertet zu werden.

6. Verfahren zum Testen einer Vorrichtung nach einem der Ansprüche 1 bis 4, **dadurch gekennzeichnet, dass** die Anweisungen dazu vorbereitet sind, zwischen der ersten und der zweiten Schicht in der OSI-Architektur in der Vorrichtung, die dazu vorbereitet ist in ein drahtloses Mobilterminal eingesetzt zu werden, ausgewertet zu werden.

7. Verfahren zum Testen einer Vorrichtung nach Anspruch 4, **dadurch gekennzeichnet, dass** der Umsetzungsschritt einer Selbsttestprozedur folgende Unterschritte aufweist:
- Ausführen der Anweisungen,
- Erhalten einiger Werte der Konfigurationseinstellungen,
- Senden der Werte zu der automatischen Testausrüstung (200).

8. System zum Testen einer Vorrichtung, dazu vorbereitet in ein drahtloses Mobilterminal eingesetzt zu werden,
**dadurch gekennzeichnet, dass** das System aufweist:
- eine Vorrichtung zum Erzeugen eines Testsignals aus einem Radiofrequenzsignal, wobei die Erzeugungsvorrichtung Mittel zum Einsetzen von Anweisungen in das Radiofrequenzsignal für eine Selbsttestprozedur der Vorrichtung aufweist, wobei das Testsignal, das sowohl andere Daten als auch die Anweisungen für eine Selbsttestprozedur der Vorrichtung aufweist, wobei die Anweisungen in das Testsignal eingebettet sind und wobei die Anweisungen eine Signatur aufweisen,
- Mittel zum Senden des Testsignals zu einer zu testenden Vorrichtung (DUT),
- eine zu testende Vorrichtung (DUT) zum Empfangen des Testsignals,
wobei die zu testende Vorrichtung aufweist:
- Mittel zum Abfangen der eingebetteten Anweisungen durch Überprüfen der Signatur in dem Testsignal durch die zu testende Vorrichtung, und
- Mittel zum Umsetzen einer Selbsttestprozedur, die Einstellungswerte an eine automatische Testausrüstung (200) in Abhängigkeit von den Anweisungen, die in dem Testsignal abgefangen wurden, ausgibt.

9. Vorrichtung, dazu vorbereitet in ein drahtloses Mobilterminal eingesetzt zu werden, **dadurch gekennzeichnet, dass** es aufweist:
- Mittel zum Empfangen eines Testsignals, das sowohl Anweisungen für eine Selbsttestprozedur der Vorrichtung als auch andere Daten aufweist, wobei die Anweisungen in das Testsignal eingebettet sind und wobei die Anweisungen eine Signatur aufweisen,
- Mittel zum Abfangen von Anweisungen, die in einem Testsignal eingebettet sind, durch Überprüfen der Signatur, und
- Mittel zum Umsetzen einer Selbsttestprozedur, die Einstellungswerte an eine automatische Testausrüstung (200) in Abhängigkeit von den Anweisungen, die in dem Testsignal abgefangen wurden, ausgibt.

10. Computerprogrammprodukt, aus einem Kommunikationsnetzwerk herunterladbar und/oder auf einem computerlesbaren Medium gespeichert und/oder durch einen Mikroprozessor ausgeführt, das Anweisungen von Programmcode zur Umsetzung eines Verfahrens zum Testen einer Vorrichtung, die dazu vorbereitet ist in ein drahtloses Mobilterminal eingesetzt zu werden, gemäß mindestens einem der Ansprüche 1 bis 5 enthält, wenn es auf einem Computer läuft.

## Revendications

1. Procédé pour tester un dispositif (DUT) destiné à être inséré dans un terminal mobile sans fil, **caractérisé en ce que** ledit procédé comprend les étapes suivantes :
- la construction d'un signal de test à partir d'un signal RF, ladite étape de construction comprenant une étape d'insertion, dans ledit signal RF, d'instructions pour une procédure d'autotest dudit dispositif, ledit signal de test comprenant à la fois d'autres données et lesdites instructions pour une procédure d'autotest dudit dispositif, lesdites instructions étant insérées dans ledit signal de test et lesdites instructions comprenant une signature,
- la transmission dudit signal de test à un dispositif sous test (DUT),
- la réception dudit signal de test par ledit dispositif sous test,
- l'interception dans ledit signal de test, par le dispositif sous test, desdites instructions insérées en vérifiant ladite signature, et
- la mise en oeuvre d'une procédure d'autotest délivrant des valeurs de paramètres à un équipement de test automatique (200), en fonction desdites instructions interceptées dans ledit signal de test.

2. Procédé pour tester un dispositif selon la revendication 1, **caractérisé en ce que** ledit procédé comprend en outre le formatage des instructions en fonction d'un protocole de communication prédéterminé.

3. Procédé pour tester un dispositif selon la revendication 2, **caractérisé en ce que** ledit protocole de communication prédéterminé appartient au groupe comprenant :
- LTE,
- LTE Advanced,
- WiMAX.

4. Procédé pour tester un dispositif selon l'une quelconque des revendications 1 à 3, **caractérisé en ce que** ladite étape d'interception comprend l'interprétation desdites instructions dans un langage en fonction dudit protocole de communication prédéterminé, délivrant des commandes pour mesurer des paramètres de configuration.

5. Procédé pour tester un dispositif selon l'une quelconque des revendications 1 à 4, **caractérisé en ce que** lesdites instructions sont destinées à être interprétées dans la deuxième couche de l'architecture OSI, dans ledit dispositif destiné à être inséré dans un terminal mobile sans fil.

6. Procédé pour tester un dispositif selon l'une quelconque des revendications 1 à 4, **caractérisé en ce que** lesdites instructions sont destinées à être interprétées entre la première et la deuxième couche de l'architecture OSI, dans ledit dispositif destiné à être inséré dans un terminal mobile sans fil.

7. Procédé pour tester un dispositif selon la revendication 4, **caractérisé en ce que** ladite étape de mise en oeuvre d'une procédure d'autotest comprend les sous-étapes suivantes :
- l'exécution desdites commandes,
- l'obtention de certaines valeurs desdits paramètres de configuration,
- la transmission desdites valeurs audit équipement de test automatique (200).

8. Système pour tester un dispositif destiné à être inséré dans un terminal mobile sans fil,
**caractérisé en ce que** ledit dispositif comprend :
- un dispositif pour construire un signal de test à partir d'un signal RF, ledit dispositif de construction comprenant des moyens pour l'insertion, dans ledit signal RF, d'instructions pour une procédure d'autotest dudit dispositif, ledit signal de test comprenant à la fois d'autres données et lesdites instructions pour une procédure d'autotest dudit dispositif, lesdites instructions étant insérées dans ledit signal de test et lesdites instructions comprenant une signature,
- des moyens pour la transmission dudit signal de test à un dispositif sous test (DUT),
- un dispositif sous test (DUT) pour recevoir ledit signal de test,
ledit dispositif sous test comprenant :
- des moyens pour l'interception, dans ledit signal de test, par le dispositif sous test, desdites instructions insérées en vérifiant ladite signature, et
- des moyens pour la mise en oeuvre d'une procédure d'autotest délivrant des valeurs de paramètre à un équipement de test automatique (200), en fonction desdites instructions interceptées dans ledit signal de test.

9. Dispositif destiné à être inséré dans un terminal mobile sans fil, **caractérisé en ce qu'**il comprend :
- des moyens pour la réception d'un signal de test comprenant à la fois des instructions pour une procédure d'autotest dudit dispositif et d'autres données, lesdites instructions étant insérées dans ledit signal de test et lesdites instructions comprenant une signature,
- des moyens pour l'interception d'instructions insérées dans un signal de test en vérifiant ladite signature, et
- des moyens pour la mise en oeuvre d'une procédure d'autotest délivrant des valeurs de paramètre à un équipement de test automatique (200), en fonction desdites instructions interceptées dans ledit signal de test.

10. Produit programme d'ordinateur téléchargeable à partir d'un réseau de communication et/ou stocké sur un support lisible par ordinateur et/ou exécuté par un microprocesseur, comprenant des instructions de code de programme pour mettre en oeuvre un procédé pour tester un dispositif destiné à être inséré dans un terminal mobile sans fil, selon au moins l'une des revendications 1 à 5, lorsqu'il est exécuté sur un ordinateur.
